# EUROPEAN PATENT APPLICATION

(11) **EP 3 002 211 A1**
(43) Date of publication of application: **06.04.2016**
(21) Application number: 14187079.0
(22) Date of filing: 30.09.2014
(51) Int. Cl.: B64C 25/10

(54) **Aircraft landing gear assembly**

(71) Applicant: Messier-Dowty Limited, Gloucester, Gloucestershire GL2 9QH (GB)
(72) Inventor: Foster, Nicholas, Cheltenham, Gloucestershire GL53 8BG (GB); Villain-Chastre, Jean-Philippe, Gloucester, Gloucestershire GL2 9QH (GB); Bennett, Ian, Cheltenham, GL51 6AF (GB)
(74) Representative: Latham, Stuart Alexander

(57) **Abstract**

An aircraft landing gear assembly (10) including structural elements (12, 14) coupled via a coupling including a bearing (22). The bearing is arranged in use to withstand static pressure of at least 300Mpa. At least half the thickness and/or volume of the bearing is formed from a polymer layer.

## Description

### BACKGROUND OF THE INVENTION

An aircraft landing gear assembly can include structural elements coupled via a coupling or joint which includes one or more bearings. For example, elements can be movably coupled via a pin joint. A pin joint will generally include a plurality of bearings, each being located between the pin and one of the structural elements.

Aircraft landing gear assembly joints can be designed to withstand static pressure of around 400MPa. Static pressure results from first and second structural elements acting on the joint while the aircraft is on the ground; for example, the lugs of side stay links acting on a common pin joint during aircraft taxiing, where the pin joint is subjected to multi-directional loading.

Aircraft landing gear assembly joints can also be designed to withstand dynamic pressure of around 150MPa due to relative movement between the structural elements; for example, during articulation of the landing gear between deployed and stowed conditions.

It is common for aircraft landing gear assembly joints to be periodically greased in order to maintain a low friction coefficient at the bearing surface to control the amount of wear, and to flush out contaminants. Integral grease channels can be provided within one or more of the structural elements to enable grease to be introduced to the bearing surface during maintenance operations.

However, the present inventors have identified that grease channels can lead to increased joint complexity. Grease channels can also result in stress raisers, defining regions of weakness in the pin joint. Moreover, a maintenance engineer could overlook a joint during maintenance, resulting in increased friction and wear. It is also possible that different types of grease could be introduced into a joint, resulting in loss of lubrication performance. Grease can also be displaced under sustained load, leading to areas starved of lubricant.

The present inventors have also identified that the mass of known landing gear assemblies can be reduced.

### SUMMARY OF THE INVENTION

In accordance with a first aspect of the present invention there is provided an aircraft landing gear assembly comprising a first structural element coupled to a second structural element via a coupling including a bearing, the bearing having first and second bearing surfaces and being designed to withstand static pressure of at least 300MPa across the bearing surfaces, the bearing having a thickness defined by the distance between the first and second bearing surfaces, wherein the bearing comprises a polymer layer having a thickness and/or volume that is at least half the thickness and/or volume of the bearing.

Although the use of polymers for self-lubricating bearings is known, polymer bearings known to the inventors are in the form of a sintered liner material with lubrication provided through the use of a thin layer (less than 1 mm, representing less than 25% of the total thickness of the bearing) of PTFE. Such bearings are designed to be used in low loaded joints arranged to withstand static pressure of around 120MPa, and with limited rotation. These known bearings are therefore not suitable for use in aircraft landing gear assemblies, in which bearings can experience static pressure of between 300MPa and 400MPa. The present inventors surprisingly found that polymer bearings as described herein can withstand static pressure of 400MPa when used as a bearing in a landing gear assembly. Landing gear assemblies according to embodiments of the invention can lead to significant weight reduction in comparison to known landing gear assemblies due to a large proportion of the bearing thickness being formed from polymer. The self-lubricating properties of the bearing also enables the omission of grease channels.

The polymer layer can have a thickness and/or a volume that is at least 60% of the bearing, preferably at least 80%, even more preferably at least 90%, more preferably at least 99.9% and in some cases 100 % of the bearing. Generally a greater proportion of the bearing being formed from polymer will result in a greater weight saving in comparison with a known bearing of equal dimensions.

The polymer can comprise a thermoplastic polymer, such as polyether-ether-ketone (PEEK), polyamidimide (PAI) or polyphenylene sulfide (PPS), or co-polymers thereof. In some embodiments the polymer can comprise an engineering thermoplastic based on polybutylene terephthalate (PBT), polyethylene terephthalate (PET), or co-polymers thereof; for example, engineering polyester.

The polymer layer can contain fillers for increasing and/or improving the lubrication and/or wear properties and/or load bearing capability. The fillers can comprise fibres and/or inorganic materials. The fillers can be elongate and randomly orientated to provide a multidirectional arrangement, which can improve load bearing capability.

The polymer layer can define the first and/or second bearing surfaces. The self-lubricating properties of the polymer layer can enable the omission of grease channels, which can reduce complexity and stress raisers.

The bearing can include an outer coating applied to the polymer layer that defines the first and/or second bearing surfaces. The coating can comprise one or more of Titanium Nitride, Diamond-Like Carbon (DLC), Molybdenum Disulfide, Graphite and/or Tungsten Disulphide. Thus, the bearing can include a coating which defines at least one of the bearing contact surfaces and is formed from a material having lower friction properties, higher working temperature and/or improved lubrication properties relative to the polymer.

The outer coating can have a thickness and/or volume that is less than 20% that of the bearing, preferably less than 10%, and more preferably less than 0.01%. In most cases the coating material will weigh more by volume than the polymer, so a thinner coating layer can reduce the effect on the weight of the landing gear assembly. A thin coating is more likely to erode during the operational lifecycle of the bearing; however, in such a case the underlying polymer layer will be revealed to define a self-lubricating first and/or second bearing surface.

The landing gear assembly, for example the coupling, can include a plurality of bearings as defined above.

The coupling can comprise a pin joint in which the, or each, bearing surrounds the pin.

The landing gear assembly can include further structural elements coupled by coupling including bearings as defined above.

The bearing(s) can be designed to withstand dynamic pressures of up to 150MPa.

In accordance with a second aspect of the present invention, there is provided an aircraft including one or more aircraft landing gear assemblies according to the first aspect.

### BRIEF DESCRIPTION OF THE DRAWINGS

Embodiments of the invention will now be described with reference to the accompanying drawings, in which:
Figure 1 is a partial view in cross section of a prior art landing gear assembly;
Figure 2 is a partial view in cross section of a landing gear assembly according to an embodiment of the invention;
Figure 3 is a diagram in cross section of the bearing of Figure 2; and
Figure 4 is a diagram in cross section of a landing gear assembly bearing according to another embodiment of the invention.

### DETAILED DESCRIPTION OF EMBODIMENT(S)

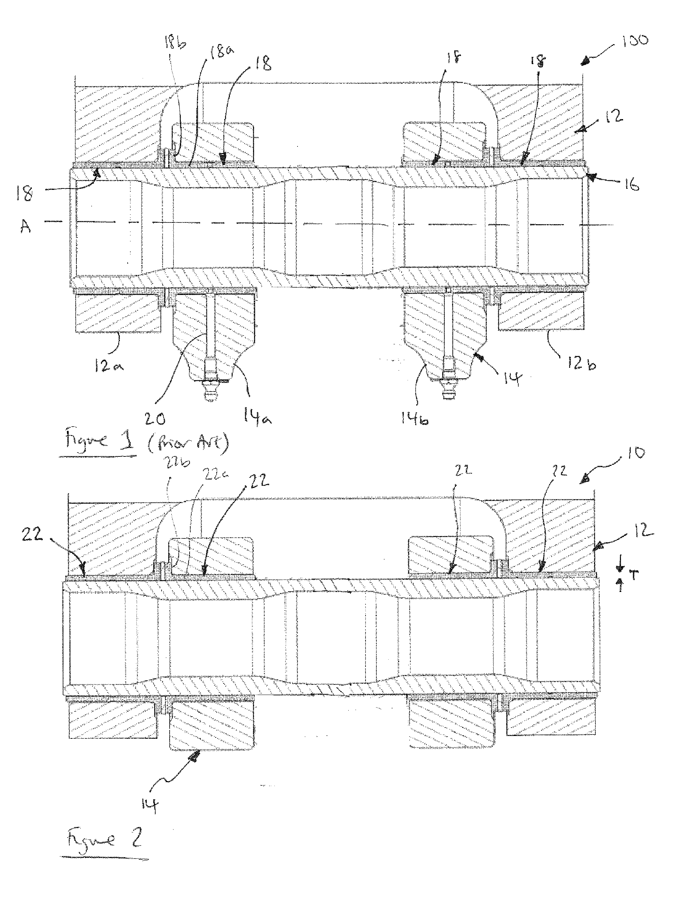

Figure 1 shows part of a conventional landing gear assembly 100 in which a first structural element 12 is pivotally coupled to a second structural element 14 via a pin joint. The first structural element 12, 14 terminates in a lug having a pair of arms 12a, 12b which define a space between them that is sized to receive first and second arms 14a, 14b of a lug defined at the end of the second structural element 14. Each arm 12a, 12b, 14a, 14b includes a hole such that when the lugs are aligned, a pin 16 can be received by each hole in order to pivotally couple the first structural element 12 to the second structural element 14. The first and second structural elements 12, 14 can for example be main fitting attachment lugs, by which the main fitting is pivotally coupled to the airframe, links of a side stay, torque links, lock links, shortening links, bogie pivot pin, actuator attachments or the like.

Each lug hole is provided with a plane bearing 18 having a body 18a which extends generally parallel with respect to the longitudinal axis A of the pin 16 so as to be situated between the lug and pin 16 to support the pin 16 in use. Thus, the body 18a of each bearing 18 defines a bearing surface. The length of each bearing body can be defined by the width of the lug arms 12a, 12b, 14a, 14b at the lug holes; examples of typical body 18a lengths are between 20mm and 100mm.

Each bearing 18 also has a radial flange 18b that reacts lateral loads, serves to limit axial travel of the bearing 18 through the lug hole and by which the bearing 18 can be attached to the lug.

The pint joint 16 is designed to withstand operational loads resulting in static pressure across each bearing body 18a of at least 300MPa, and in some cases pressures of around 400MPa. The joint can also be designed to withstand dynamic pressure of around 150MPa as the landing gear elements move between conditions. Due to this, the bearings 18 are generally formed from aluminium bronze or stainless steel. Grease channels 20 are provided within at least some of the structural elements 14a, 14b to enable grease lubricant or the like to be introduced to the bearing surface during maintenance operations. However, the present inventors have identified that grease channels 20 can lead to increased joint complexity. Grease channels 20 can also result in stress raisers, defining regions of weakness in the pin joint. Moreover, a maintenance engineer could overlook a joint during maintenance, resulting in increased friction and wear. It is also possible that different types of grease could be introduced into a joint, resulting in loss of lubrication performance.

Figure 2 shows part of a landing gear assembly 10 according to an embodiment of the present invention. The landing gear assembly 10 is similar to the landing gear assembly 100 of Figure 1 and, for brevity, only the differences will be described.

The bearings 22 in the illustrated embodiment are formed from a polymer material. The polymer can comprise a thermoplastic. In some embodiments, the thermoplastic can comprise polyether-ether-ketone (PEEK), polyamidimide (PAI), polyphenylene sulfide (PPS), or co-polymers thereof. In some embodiments the polymer can comprise an engineering thermoplastic based on polybutylene terephthalate (PBT), polyethylene terephthalate (PET), or co-polymers thereof; for example, engineering polyester.

The polymer bearing 22 can also include fillers for increasing and/or improving the lubrication and/or wear properties. The fillers can comprise fibres, such as carbon fibre, glass fibre, or aramids. The fillers can comprise inorganic materials such as aluminium oxide, bronze, carbon, ceramic, glass, graphite, graphene and/or silicon carbide. The inorganic materials can be woven, or in the form of particles such as powder or spheres. The fillers can each be elongate and randomly orientated to provide a multidirectional arrangement, which can improve load bearing capability. The polymer composite can comprise a quantity of fillers of 1 to 50% by volume, preferably 15 to 35% and more preferably 25-30%.

In one specific example, the polymer can be a polymer within the Meldin 5000(TM) family produced by Saint-Gobain, preferably Meldin 5330(TM).

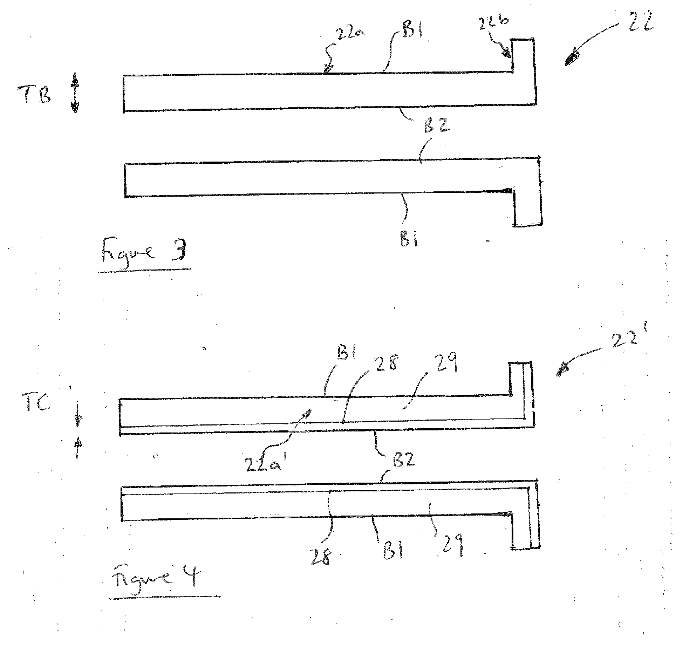

As illustrated in Figure 3, the bearing 22 has a first major outer surface that defines a first bearing surface B1, and a second major outer surface that defines a second bearing surface B2. The bearing surfaces B1, B2 are arranged to be contacted by parts of the landing gear assembly which are distinct from the bearing 22. The bearing surfaces B1 and B2 are parallel; however, in other embodiments the bearing can includes non-parallel sides, such as a tapered or spherical bearing. The distance between the bearing surfaces B1, B2 defines the thickness TB of the bearing body 22a. The bearing thickness TB can be, for example, between 4mm and 1.5mm. In the illustrated example, the bearing 22 is formed entirely of polymer. Thus, the polymer layer is 100% of the thickness and volume of the bearing.

Referring to Figure 4, the bearing 22' can also include an outer coating 28 applied to the polymer to define the first bearing surface B1 and/or the second bearing surface B2. In the illustrated example the coating is applied to the bearing face arranged to contact the pin and also to the outwardly facing flange face; however, in other embodiments any surface of the bearing can be provided with a coating. The polymer layer 29 spans the bearing surfaces B1, B2 i.e. is as wide as them.

The coating can be formed from a material having one or more of the following properties in comparison to the polymer: lower coefficient of friction, higher working temperature and/or improved lubrication. Examples of suitable coating materials are Titanium Nitride, Diamond Like Carbon (DLC), Molybdenum Disulfide, Graphite and Tungsten Disulphide. The coating can be applied using physical vapour deposition (PVD) or spraying the component at high velocity. PVD is often performed at high temperature, so this should be below the allowable temperature for the substrate material. The thickness TC of the coating and/or volume of the coating can be less than 20% of the bearing thickness and/or coating, preferably less than 10%, and more preferably less than 0.01%. Although the coating 28 is likely to be eroded during the life of the bearing 22', the underlying polymer layer provides a suitable backup self-lubricating bearing surface.

Although the use of polymers for self-lubricating bearings is known, polymer bearings known to the inventors are in the form of a sintered liner material with lubrication provided through the use of a thin layer (less than 1 mm, representing less than 25% of the total thickness of the bearing) of PTFE. Such bearings are designed to be used in low loaded joints arranged to withstand static pressure of around 120MPa, and with limited rotation. These known bearings are therefore not suitable for use in aircraft landing gear assemblies, in which bearings can experience static pressure of between 300MPa and 400MPa. The present inventors surprisingly found that polymer bearings according to the invention can withstand static pressure of 400MPa when used as a bearing in a landing gear assembly.

Aircraft landing gear assemblies according to embodiments of the invention including self-lubricating polymer bearings as described above allow the structural members to be easier to design and analyse and can significantly reduce the weight of an aircraft landing gear assembly. Although some embodiments can include a non-polymer coating or back plate, the bearings still provide a significant weight saving over existing bearings because the layer of polymer can have a thickness and/or volume that represents a significant portion of, and in some cases all of, the bearing.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parenthesis shall not be construed as limiting the claims. The word "comprising" does not exclude the presence of elements or steps other than those listed in any claim or the specification as a whole. The singular reference of an element does not exclude the plural reference of such elements and vice-versa. Parts of the invention may be implemented by means of hardware comprising several distinct elements. In a device claim enumerating several parts, several of these parts may be embodied by one and the same item of hardware. The mere fact that certain measures are recited in mutually different dependent claims does not indicate that a combination of these measures cannot be used to advantage.

## Claims

1. An aircraft landing gear assembly comprising a first structural element coupled to a second structural element via a coupling comprising a bearing, the bearing having first and second bearing surfaces and being arranged in use to withstand static pressure of at least 300MPa, the bearing having a thickness defined between the first and second bearing surfaces, wherein the bearing comprises a polymer layer having a thickness and/or volume that is at least half that of the bearing.

2. An aircraft landing gear assembly according to claim 1, wherein the polymer comprises a thermoplastic polymer.

3. An aircraft landing gear assembly according to any preceding claim, wherein the polymer layer contains fillers.

4. An aircraft landing gear assembly according to claim 3, wherein the fillers are elongate and randomly orientated.

5. An aircraft landing gear assembly according to any preceding claim, wherein the first bearing surface is defined by the polymer layer.

6. An aircraft landing gear assembly according to any preceding claim, wherein the second bearing surface is defined by the polymer layer.

7. An aircraft landing gear assembly according to any of claims 1 to 4, wherein the first and/or second bearing surfaces are defined by a coating applied to the polymer layer, the coating being formed from a material having one or more of the following properties in comparison to the polymer: a lower coefficient of friction, higher working temperature and/or improved lubrication.

8. An aircraft landing gear assembly according to any preceding claim, wherein the first part is coupled to the second part via a pin joint, and wherein the bearing is provided between the pin one the one hand and one or more of the first and second parts on the other hand.

9. An aircraft landing gear assembly according to any preceding claim, comprising a plurality of bearings as defined in any preceding claim.

10. An aircraft including one or more aircraft landing gear assemblies according to any preceding claim.
